# EUROPEAN PATENT APPLICATION

(11) **EP 1 887 294 A1**
(43) Date of publication of application: **13.02.2008**
(21) Application number: 06016418.3
(22) Date of filing: 07.08.2006
(51) Int. Cl.: F24J 2/52, F24J 2/34, F24J 2/44

(54) **Support frame for a thermal siphon water tank and a solar heating panel**

(71) Applicant: Aplicaciones Placas Solares, S.L., 08206 Sabadell (ES)
(72) Inventor: Moreno Calderón, Antonio, 08206 Sabadell (Barcelona) (ES)
(74) Representative: Maldonado Jordan, Julia

(57) **Abstract**

The support frame comprises of a frame (31) fitted with some legs (4) and with some spars (1) with at least one upper crossbar (2) and one lower crossbar (2) fixed by means of some clamps (7). The crossbars (2) have a flange (21) for the housing adjusted to the shape of the panel (31), and having some clamps (8) on these flanges (21) for the tightening and holding of the panel (31). The frame has some hot water tank supports (32) made from stepped legs (41) arranged on the rear frame legs (4) and joined by means of transversal spacers (42).

## Description

### Object of the Invention

This present invention refers to a support frame for a thermal siphon water tank that has a rectangular support frame for the solar panel of the thermal siphon water tank, the frame being inclined on some rear legs.

### Background to the Invention

At the present time the taking advantage of renewable energy and sustainable development has boosted the present technologies regarding solar energy.

One of these solar energy collection technologies includes the use of thermal siphon water tanks to obtain thermal energy by solar heating. This energy is used to supply buildings and similar places, in which the heating and sanitary hot water come from these pieces of equipment. These thermal siphon water tanks are mainly made up of sheet or thermal solar panel and an attached water tank in order to hold the hot water that is being produced, thus storing the thermal energy that is being collected for its use.

The thermal siphon water tank is very heavy because of its thick construction (it stores a greater amount of the heat) and it is full of a glycol with a high molecular weight, for example propylene glycol. In the heart of the glycol there is a coil through which the water to be heated passes, which usually enters at the top of one of the sides of the panel, and has its exit at the rear of the other side. In order to take greater advantage of the energy it is common for several thermal siphon water tanks to be arranged in series making up batteries, the water to be heated passing from one panel to another.

The water to be heated circulates under great pressure in the coil of the thermal siphon water tank and because of this the connection between the outlet of one thermal siphon water tank panel and the inlet of the next panel must be very carefully lined up so as to reduce losses.

The thermal siphon water tanks are assembled on some support frames, which have the sheets or panels inclined and angled in an optimal manner for their heating from the sun, as the attached tank can, by preference, be fitted on the ground under the panel itself. With this assembly the building vibrations where the thermal siphon water tanks are assembled or the movement of these frames themselves can cause movement between them, putting pressure on the water connections which end up losing water or even causing them to break.

These thermal siphon water tank support frames are usually individual and include a rectangular support frame for the thermal siphon water tank solar panel, this frame being supported at the bottom on the ground and inclined backwards on some legs or supports for the adjustment of the inclination. Given that, as has already been stated, these panels are very heavy it is difficult for several of these frames to make up a uniform battery, as their placement is complicated.

Another solution is for frames in which several thermal siphon water tanks can be lined up, in such a way that a single frame allows for a more exact assembly. However these frames have problems when fitting each one of the thermal siphon water tanks so that they are duly lined up to each other.

These frames are usually made from metallic profiles. These profiles have to fulfil two basic conditions: To provide the frame with solid stability and allow the frame assembler to be able to assemble them with the appropriate angle for each case, which depends on the latitude and sometimes the nature of the assembly site.

### Description of the Invention

The support frame for the thermal siphon water tank of this invention has some technical peculiarities aimed at optimising the assembly of the thermal siphon water tanks and the stability during their use, either in an individual manner or making up batteries of consecutive units in series.

The support frame is made up of some "U" section spars that are connected with at least an upper cross bar and a lower crossbar by means of some threaded clamps in said spars, the said clamps pinching a flat sheet or part of the crossbars with some fixing studs. At the front each crossbar has a flange structure suitable to house the respective upper and lower shape of the thermal siphon water tank solar panel. There are some clamps supported by a "U" shaped groove on these flanges, these clamps being held under tension by a bolt preferably anchored to the spars, thus holding the clamp to the front edge of the panel. In this way, a frame can be made up of two or more spars, the number being that which are considered necessary to support the weight of the installation.

The frame has respective supports for the thermal siphon water tank, which are made up of stepped legs, arranged in parallel on the rear legs of the frame, from the inclined spar to a lower joint support of the adjacent leg. These stepped legs are joined by means of transversal spacers that horizontally define a support area of said tank.

The clamp that holds the crossbar to the spar has a "U" shaped section, having some fixing studs of the crossbar on the rear inner part. In this way the crossbar can be fitted at differing heights or distances on the same clamp by means of the movement of said fixing studs, adjusting their position to the dimensions of the thermal siphon water tank panel. At the inner front part of the clamp there are some thinner studs that establish the immobility of the crossbar by tightening the anchoring screw. In the event that two adjoining crossbars are connected to a spar, for example in the making of a frame for thermal siphon water tanks arranged in battery, the clamp has at least double the length of a conventional clamp, in such a way that the ends of both crossbars can be introduced. In addition, this way achieves that the two adjoining crossbars are completely lined up, with which subsequently a better assembly of the adjoining panels of the thermal siphon water tanks is possible, making the connection of the coils easier.

A main arrangement of the crossbar is made by an appreciably flat sheet from which the profile or support flange of the thermal siphon water tank panel comes from its side. On the rear face of this flat base panel there is a plurality of grooves adapted to house the fixing studs of the clamp at different heights, in order to enable the adjustment of its position. On the front side of the flat crossbar panel there are some thinner studs in conjunction with the fixing studs, there is a thickened protrusion towards the back next to the opposing edge of said thinner studs. This thickening contributes to a simultaneous correct support of the crossbar on the spar and the support clamp.

The clamps that hold the different panels that can be fitted to the frame at the front have a "U" shaped fitting on the rear side for the support on the front flange of the crossbar and a side flange in which there is a through opening for the anchoring bolt to the spar, there is an elbow shaped fixing rim for the thermal siphon water tank panel on the front edge of the clamp. This rim has a detailed shape depending on the configuration of the side of the thermal siphon water tank panel for its firm fixing.

The side flange of the clamp has some means to prevent the turning of the anchoring bolt, such as a narrow channel where the bolt head is fitted or allowing the use of "hammer screws", which have a "T" shaped rectangular and extended head on both sides of the threaded stud.

The rear leg and the adjacent stepped leg are joined by means of at least one bolt and an intermediary spacer. In turn, the lower joint support is made up of a segment of a "U" shaped bar, to which a continuous leg and a stepped leg are fixed by means of respective transversal bolts. This support is moveable during the assembly so that the installer can determine the ideal angle of inclination for the panel support frame. In turn, the spars are fixed at the lower end to the ground by means of a support with some articulation so as to adjust the angle of inclination easily. This articulation can be a transversal bolt.

The stepped legs have some insulating spacers on which the tank is supported. These spacers can be polyamide blocks or something similar, with an opening so that the anchor bolts can pass through.

### Description of the Figures

In order to complete the description that is being made and for the purpose of providing a better understanding of its characteristics, a set of drawings is attached to this present description in which the figures being by way of illustration and are not by way of limitation on the invention, in which the following is shown:

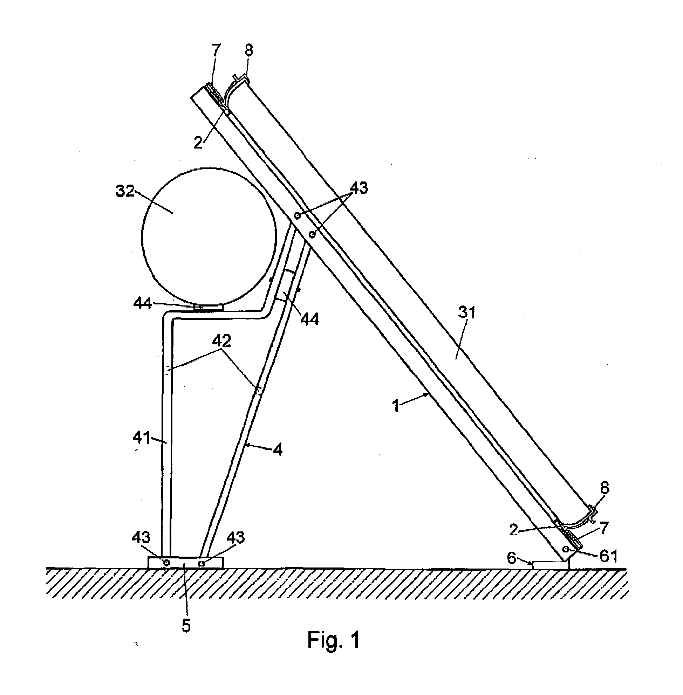

- Figure 1 shows an outline view of the frame with a thermal siphon water tank installed.
- Figure 2 shows a front view of the thermal siphon water tank panel support frame.
- Figure 3 shows a detailed outline view of the assembly of a crossbar and the upper clamp.
- Figure 4 shows a detail in perspective of the lined up assembly of two consecutive crossbars with the same clamp.
- Figure 5 shows a profile view of an alternative clamp.

### Description of a preferred embodiment

As can be seen in the referred to figures support frame for the thermal siphon water tank is made up of two "U" section spars (1) and some thermal siphon water tank panel (31) support crossbars (2), the spars (1) are supported on some rear legs (4) down to a lower support (5), also having a "U" section that is also connected to a stepped leg (41) which extends to the rear part of the spar (1). There are some reinforcing spacers (42) and for the support of the hot water tank (32) between the stepped legs (41) and the legs (4) of the two spars (1). Each spar (1) has a hinged ground anchoring support (6) at its end, this support (6) by preference being an inverted "T" shape, which is connected by means of an articulated bolt (61) to the stated spar (1) in order to define the inclination of the panel (31) to be located.

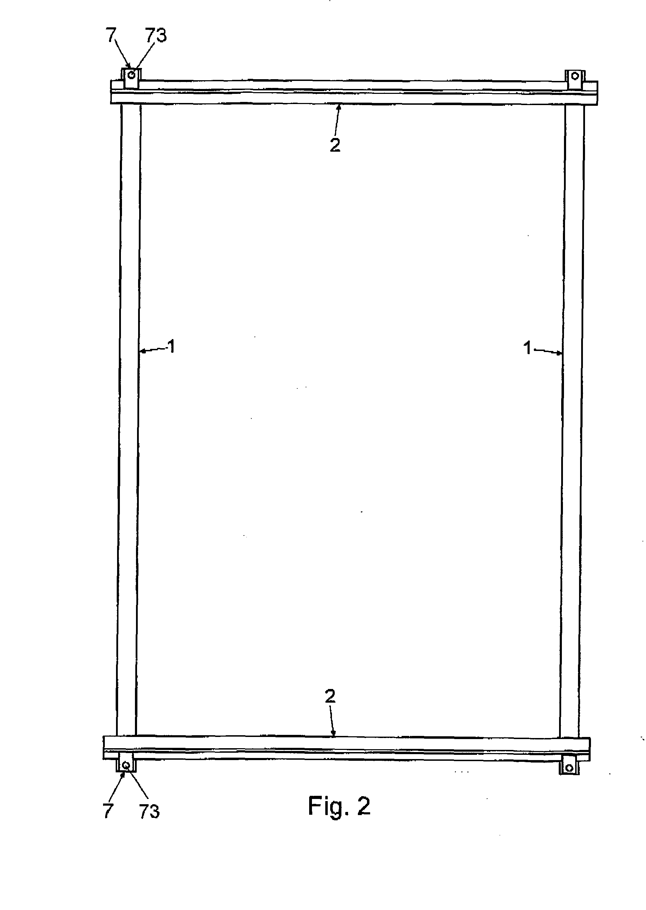

As can be seen in Figure 2, there are two opposing clamps (7) over the spar (1), one next to the upper end and the other next to the lower end for the placement and fixing of the upper and lower crossbars (2) respectively.

Each clamp (7) is "U" shaped and has some thick studs (71) on the inner rear face for the fixing of the adjacent crossbar (2) and some thinner studs (72) on the inner front face for the fixing and immobilisation of said crossbar (2) when the anchoring screw (73) of said clamp (7) is tightened on the spar (1).

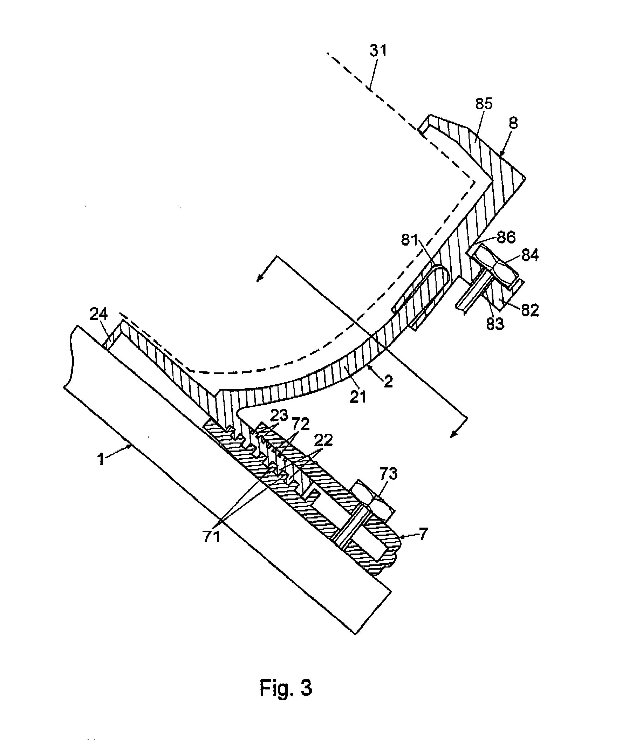

In turn, Figure 3 shows the crossbar (2) is made up of an appreciably flat plate from which a frontal flange (21) comes out with a suitable shape to take the upper and/or lower structure of the thermal siphon water tank plate (31) with a suitable shape. The flat plate of the crossbar (2) has a plurality of grooves (22) on its rear face suitable for housing the fixing studs (71) of the clamp (7). These grooves (22) are arranged with a suitable number to be able to place the crossbar (2) at differing heights or different locations against the clamp (7) in order to mate with the plate in a tight manner. The crossbar (2) has a plurality of thin studs (23) on its front face aimed at ensuring the fixing of the clamp (7) when it meets the thin studs (72) also on it. The crossbar (2) has a thickening (24) that protrudes backwards for support on the spar (1) on the opposing rim of said studs and grooves (22 & 23), keeping the thick part of the clamp (7) under the crossbar (2).

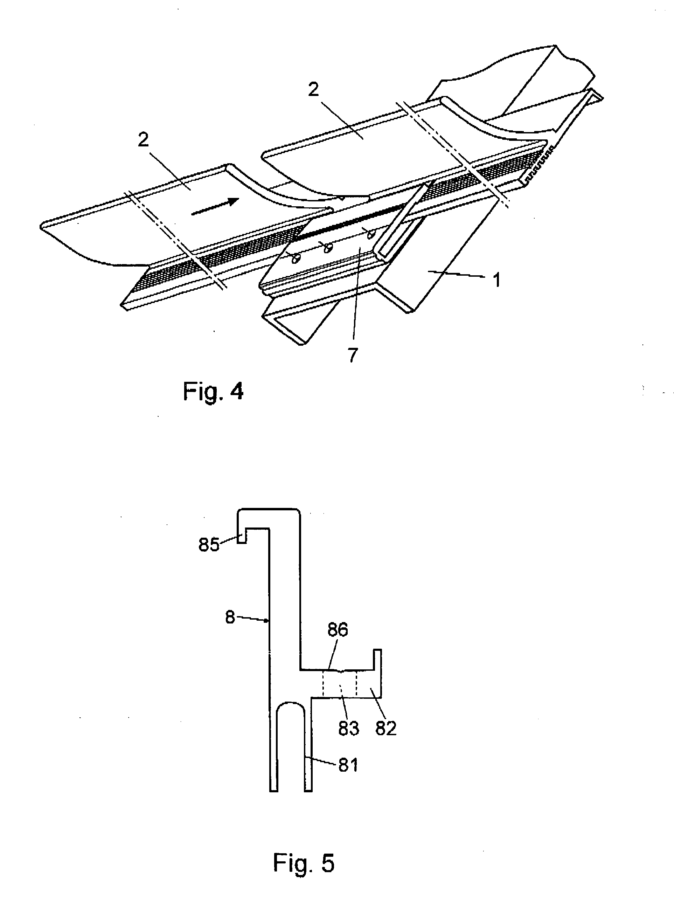

It has been planned that in an alternative embodiment, the clamp (7) has a special width so as to allow a single clamp (7) to be able to hold two adjoining crossbars (2) by their ends in a completely lined up manner, for example to have a frame of panels (31) assembled in series, as and how the details in Figure 4 show.

The panel (31) arranged on the crossbars (2) are firmly held by means of some clamps (8). These clamps (8) have a "U" shaped slot (81) at their rear end to support the front flange (21) of the crossbar (2) and a flange (82) on one side in which there is an opening (83) for a through bolt (84) to anchor it to the spar (1). At the front end of the clamp (8) there is an elbow shaped rim (85) for the fixing of the panel (31).

The side flange (82) of the clamp (8) has some devices to prevent the turning of the anchoring bolt, such as a channel (86) in which the "T" shaped head of a "hammer screw" or similar is held.

The rear leg (4) of the support is held at the rear part of each spar (1) and to the lower support (5) by means of respective transversal bolts (43). The stepped leg (41) adjacent to each leg (4) is also fixed to the spar (1) and to the lower support (5) by means of respective transversal bolts (43). Said legs (4 & 41) are connected by means of a bolt and a spacer (44), preferably made from polyamide.

The leg assembly (4 & 41) and the spacers (42) placed between the adjacent spars (1) reinforce the sturdiness of the frame structure and enable the hot water tank (32) to be fitted in a transversal manner and supported on some polyamide insulating spacers (44).

Once having sufficiently described the nature of the invention, likewise having given a preferred embodiment it is placed on record that the materials, shape, size and arrangement of the elements described can be modified provided that they do not mean an alteration of the basic essentials of the invention that are claimed below.

## Claims

1. A support frame for the thermal siphon water tank being of the type that has a rectangular support frame for the thermal siphon water tank solar panel (31), where the lower part of this frame is supported on the ground and inclined backwards on some legs (4) or supports for the adjustment of the incline,, **characterised in that** the frame has some "U" section spars (1) that are joined to at least one upper crossbar (2) and one lower crossbar (2) by means of some clamps (7) bolted to said spars (1), the said clamps (7) trapping a flat panel or part of the crossbars (2) by some fixing studs (71 & 72), each crossbar (2) having a flange (21) on its front part with an appropriate shape for the housing adapted to the respective upper or lower shape of the thermal siphon water tank solar panel (31), with some clamps (8) supported on these flanges (21) supported by the "U" shaped slot and held tight preferably by an anchoring bolt (84) on the spar (1), these clamps (8) holding the front edge of the panel (31); and because the respective hot water tank supports (32) are formed by stepped legs (41) arranged on the rear legs (4) of the frame, from the spar (1) inclined towards a lower support (5) connected to the adjacent leg (4), these legs being stepped (41) and joined by some transversal spacers (42), defining a support area for said tank (32).

2. A frame, according to Claim 1, **characterised in that** the clamp (7) has a "U" shaped section, the rear inner part having some fixing studs (71) from the crossbar (2), and on its inner front part some thinner fixing studs (72) from the crossbar (2) on tightening the bolt (73).

3. A frame, according to Claim 1, **characterised in that** the crossbar (2) is made from an appreciably thin plate from which the flange (21) comes out, this plate having a plurality of grooves (22) on its rear face suitable for housing the fixing studs (71) of the clamp (7) at differing heights so as to adjust its position and some thinner studs (23) on its front face connecting to the fixing studs (72), with a thickening (24) protruding backwards for support on the spar (1) with the opposing rim next to said studs (22 & 23).

4. A frame, according to Claim 1, **characterised in that** these clamps (8) have a "U" shaped slot (81) at their rear end to support the front flange (21) of the crossbar (2) and a flange (82) on one side in which there is an opening (83) for a through bolt (84) to anchor it to the spar (1), with an elbow shaped fixing slot (85) for the plate (31) at the front end of the clamp (8).

5. A frame, according to Claim 4, **characterised in that** the side flange (82) of the clamp (8) has some means to prevent the turning of the anchoring bolt (84).

6. A frame, according to Claim 1, **characterised in that** the rear leg (4) and the adjacent stepped leg (41) is joined by means of at least one bolt and an intermediary spacer (44).

7. A frame, according to Claim 1, **characterised in that** the common lower support (5) is made from a piece of "U" shaped bar.

8. A frame, according to Claim 1, **characterised in that** the spars (1) are held to the ground at their lower ends by means of a support (6) with some articulation so as to adjust the angle of incline.

9. A frame, according to Claim 8, **characterised in that** the articulation is a transversal bolt (61).

10. A frame, according to Claim 1, **characterised in that** the stepped legs (41) and/or the transversal spacers (42) have some insulating spacers (44) on which the tank (32) is supported.
